(19) Europäisches Patentamt
European Patent Office
Office européen des brevets

(11) Veröffentlichungsnummer: **0 483 611 A1**

(12) **EUROPÄISCHE PATENTANMELDUNG**

(21) Anmeldenummer: **91117738.4**

(22) Anmeldetag: **17.10.91**

(51) Int. Cl.5: **F16K 5/20**

(30) Priorität: **29.10.90 DE 4034396**

(43) Veröffentlichungstag der Anmeldung:
**06.05.92 Patentblatt 92/19**

(84) Benannte Vertragsstaaten:
**BE CH DE FR IT LI NL**

(71) Anmelder: **Feodor Burgmann Dichtungswerke GmbH & Co.**
**Äussere Sauerlacher Strasse 6-8**
**W-8190 Wolfratshausen 1(DE)**

(72) Erfinder: **Engelke, Rainer, Dipl.-Ing.**
**Bussardstrasse 24**
**W-8025 Unterhaching(DE)**
Erfinder: **Rosenbusch, Alexander, Dipl.-Ing.**
**Ismaninger Strasse 118**
**W-8000 München 80(DE)**
Erfinder: **Zatterin, Hans-Werner, Dipl.-Ing.**
**Birkenstrasse 16**
**W-8190 Wolfratshausen(DE)**

(74) Vertreter: **Schmidt, Horst, Dr.**
**Siegfriedstrasse 8**
**W-8000 München 40(DE)**

(54) **Dichtungsanordnung für einen Kugelhahn.**

(57) Eine Dichtungsanordnung (A) für einen Kugelhahn umfasst ein mit der Kugel (10) in dichtem Eingriff stehendes Kugeldichtungselement (20), das durch ein Sekundärdichtungselement (24) gegenüber dem Gehäuse (1) des Kugelhahnes abgedichtet ist. Auf das Sekundärdichtungselement (24) wirkt die Kraft einer Vorspanneinrichtung, bestehend aus einem auf dem Kugeldichtungselement (20) angeordneten Kolbenelement (26), welches einen vorzugsweise durch eine Metallbalganordnung (28) abgedichteten Druckraum (30) definiert, in den das abzudichtende Medium über eine Passage ($P_1$) eingeführt werden kann. Das Kolbenelement (26) wird daher mit einem dem Mediumdruck entsprechenden Druck beaufschlagt so dass die auf das Sekundärdichtungselement (24) und auf das Kugeldichtungselement (20) ausgeübten Vorspannkräfte den jeweiligen Druckverhältnissen des abzudichtenden Mediums angepasst bzw. minimiert, anderseits stets ausreichend gross sind, dass bevorzugtes Material für das Sekundärdichtungselement (24) verpresster Reingraphit ist. Die Dichtungsanordnung zeichnet sich durch eine hohe Hitzebeständigkeit aus. Bevorzugter Einsatz ist bei Kugelhähnen mit positiv gelagerter Kugel.

Fig. 2

Die Erfindung betrifft eine Dichtungsanordnung für einen Kugelhahn gemäss Oberbegriff des Patentanspruches 1.

Ein bekannter Kugelhahn (EP-A-27 048, vgl. auch DE-A-24 35 051) umfasst ein Kugeldichtungselement, das unter der Kraft einer Spiralfeder in dichtendem Eingriff mit der Oberfläche der Kugel gedrückt wird. Das Kugeldichtungselement seinerseits ist durch ein Sekundärdichtungselement in Gestalt eines O-Ringes und eines Graphitringes, die beide auf dem Kugeldichtungselement angeordnet sind, gegenüber dem Gehäuse abgedichtet. Der Graphitring schafft eine Notdichtung bei Ausfall des O-Ringes unter Feuereinwirkung und gelangt erst unter diesen Umständen in eine dichtende Beziehung zu den umgebenden Teilen. Bekannt ist es ferner (DE-A-37 44 452), bei einer schwimmend gelagerten Kugel das Kugeldichtungselement mittels eines Graphitelementes mit einer Vorspannkraft zu beaufschlagen. Dabei ist es weiter bekannt (EP-A-318 737), die Vorspannkraft über ein Sekundärdichtungselement, das ebenfalls aus Graphit bestehen kann, auf das Kugeldichtungselement wirken zu lassen. Infolge der Verwendung von Graphit als Dichtungsmaterial muss das Sekundärdichtungselement zur Erzielung einer ausreichenden Dichtwirkung bis Nenndruck mit ausserordentlich hohen Vorspannkräften beaufschlagt werden. Zwar können bei Kugelhähnen mit schwimmend gelagerter Kugel hierfür die anstehenden Hydraulikdrücke herangezogen werden. Bei Kugelhähnen mit gelagerter Kugel ist dies nicht möglich, so dass die hohen Vorspannkräfte alleine über die betreffende Vorspanneinrichtung aufgebracht werden müssten und auch dann vorherrschten, wenn der Druck des abzudichtenden Mediums hierfür grundsätzlich keine Veranlassung gibt. Andererseits bedeuten hohe Vorspannkräfte entsprechend hohe Drehmomente für die Verstellung der Kugel und hohen Verschleiss an den miteinander in Eingriff stehenden Dichtflächen.

Der Erfindung liegt die Aufgabe zugrunde, eine Dichtungsanordnung der im Oberbegriff des Patentanspruches 1 genannten Gattung zu schaffen, die bei verbesserter Handhabbarkeit und geringerer Anfälligkeit gegenüber Verschleiss der Dichtflächen den Einsatz hitzebeständiger Dichtungselemente unabhängig von der Art der gewählten Lagerung der Kugel ermöglicht.

Diese Aufgabe wird erfindungsgemäss durch die Merkmale im kennzeichnenden Teil des Patentanspruches 1 gelöst. Die Vorspannkraft, mit der das Sekundärdichtungselement - und in der Regel damit auch das Kugeldichtungselement - beaufschlagt wird, um eine ausreichende Dichtwirkung zu erzielen, ist bei der erfindungsgemässen Dichtungsanordnung grundsätzlich keine z.B. auf den Nenndruck des Kugelhahnes abgestellte feste Grösse (bei einem Nenndruck von z.B. ≥ 300 bar würde eine Vorspannkraft von 31000 N erforderlich sein, wenn das Sekundärdichtungselement aus Reingraphit besteht, um eine ausreichende Dichtwirkung zu erhalten). Vielmehr wird die Vorspannkraft auf den jeweiligen Druck des abzudichtenden Mediums automatisch abgestimmt bzw. herauf- oder herabgesetzt, so dass stets nur die für die jeweiligen Betriebsverhältnisse erforderliche Vorspannkraft aufgebracht wird. Die für die Handhabung des Kugelhahnes erforderlichen Drehmomente sind daher stets auf die herrschenden Druckverhältnisse minimiert. Entsprechend herabgesetzt ist damit auch die Flächenpressung zwischen den abzudichtenden Teilen und deren Verschleiss. Die Erfindung gewährleistet andererseits stets ausreichend hohe Vorspannkräfte, was den bevorzugten Einsatz von Sekundärdichtungselementen aus hitzebeständigem Kohlenstoffmaterial, insbesondere verpresstem Graphit, auch bei Kugelhähnen mit positiv gelagerter Kugel ermöglicht, bei denen, wie erwähnt, die hydraulischen Kräfte bislang nicht für die Erzielung der Vorspannkraft herangezogen werden konnten. Wenn gemäss einer bevorzugten Weiterbildung der Erfindung das Sekundärdichtungselement nicht direkt auf dem Kugeldichtungselement, sondern auf dem Kolbenelement angeordnet ist, wird darüber hinaus der Vorteil einer besonders montagefreundlichen Dichtungsanordnung mit weiter verbesserter Funktion erzielt, da eine Kraftnebenschlüsse bedingende Reibung zwischen dem Sekundärdichtungselement und den benachbarten Bauteilen praktisch wegfällt.

Der mit dem Druck des abzudichtenden Mediums direkt oder indirekt beaufschlagte Druckraum im Kugeldichtungselement ist vorzugsweise durch eine Balganordnung abgedichtet. Die Balganordnung kann, wenn erwünscht, eine anfängliche mediumdruckunabhängige Federvorspannkraft aufbringen. Es können jedoch auch andere mediumdruckunabhängige Vorspanneinrichtungen, z.B. in Gestalt von kleinen Spiralfedern oder dgl., vorgesehen werden. Eine besonders gebrauchsvorteilhafte Weiterbildung der Erfindung zeichnet sich dadurch aus, dass der Druckraum zwischen einem Paar miteinander fest verbundenen Kolbenelementen gebildet ist. Dabei können die Kolbenelemente, die Balganordnung und das Sekundärdichtungselement zu einer austauschbaren Einheit zusammengefasst sein, die eine entsprechend rasche Montage und Demontage der Dichtungsanordnung ermöglicht. Bezüglich anderer vorteilhafter Weiterbildungen der Erfindung wird auf die Patentansprüche verwiesen.

Die Erfindung wird nachfolgend anhand von Ausführungsformen und der Zeichnung, in der gleiche oder ähnliche Teile die gleichen Bezugszeichen tragen, näher erläutert. Es zeigen:

Fig. 1 in längsgeschnittener fragmentarischer Ansicht einen Kugelhahn mit einer Dichtungsanordnung gemäss einer ersten Ausführungsform der Erfindung,

Fig. 2 in vergrösserter geschnittener Detailansicht die Dichtungsanordnung gemäss Fig. 1,

Fig. 3 bis 5 in Ansichten ähnlich Fig. 2 Dichtungsanordnungen gemäss einer zweiten bis vierten Ausführungsform der Erfindung,

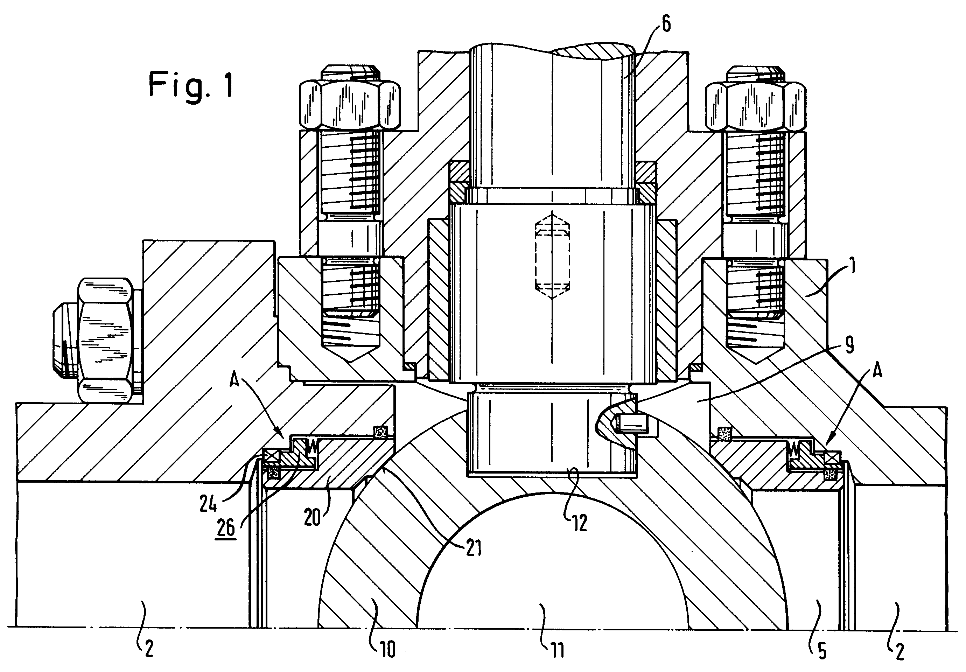

Der Kugelhahn gemäss der in Fig. 1 gezeigten ersten Ausführungsform der Erfindung umfasst ein Gehäuse 1, welches von einer axialen Durchgangsbohrung oder -passage 2 durchsetzt ist. Endseitig der Durchgangspassage 2 können am Gehäuse 1 Befestigungsflansche oder andere Montageeinrichtungen zur Verbindung des Kugelhahns mit einer Rohrleitung vorgesehen sein.

Die Durchgangspassage 2 bildet innen einen zentralen erweiterten Bereich 5, in dem eine Kugel 10 mit einer bei 11 angedeuteten Durchbohrung aufgenommen ist. Die Kugel 10 hat eine äussere Ausnehmung 12, welche einen Zapfen 7 am unteren Ende einer im Gehäuse 1 gelagerten Betätigungswelle 6 aufnimmt, mit deren Hilfe die Kugel um eine Achse senkrecht zur Längsachse der Durchgangspassage 2 gedreht werden kann. Die Durchbohrung 11 der Kugel 10 kann auf diese Weise in und aus einer ausgerichteten Beziehung zur Durchgangspassage 2 gebracht werden. Die Betätigungswelle 6 ist in bekannter Weise gegenüber dem Gehäuse 1 abgedichtet und kann an der Aussenseite des Gehäuses mit nicht gezeigten Betätigungsorganen versehen sein.

Die Kugel 10 hat ferner an einer der Ausnehmung 12 diametral gegenüberliegenden Stelle eine weitere Ausnehmung (nicht gezeigt) zur Aufnahme eines im Gehäuse 1 gehaltenen Lagerzapfens (ebenfalls nicht gezeigt) ähnlich dem Zapfen 7 der Betätigungswelle 6, was eine positive Lagerung der Kugel 10 im Gehäuse 1 schafft. Die Kugel 10 kann daher unter den auf sie einwirkenden Mediumdrükken nur im Rahmen des Spieles der sie drehbeweglich haltenden oberen und unteren Lager eine axiale Bewegung relativ zum Gehäuse 1 bzw. zur Durchgangspassage 2 vornehmen.

Die Erfindung ist jedoch auf eine positive Lagerung der Kugel nicht beschränkt, sondern kann, wenn erwünscht, auch bei schwimmend gelagerten Kugeln angewendet werden.

Der vorbeschriebene Aufbau des Kugelhahnes ist grundsätzlich bekannt, so dass auf eine detailliertere Beschreibung verzichtet werden kann.

Wie dargestellt, ist die Kugel 10 gegenüber dem Gehäuse 1 durch ein Paar axial beabstandete auf- bzw. abstromseitige Dichtungsanordnungen mit erfindungsgemässem Aufbau abgedichtet, die das allgemeine Bezugszeichen A tragen. Die Dichtungsanordnungen A sind identisch aufgebaut, so dass im folgenden nur eine der Dichtungsanordnungen (in Fig. 1 die linke) näher beschrieben werden braucht.

Ein durch die auf- und abstromseitigen Dichtungsanordnungen A, A und durch die äussere Oberfläche der Kugel 10 und das umgebende Gehäuse 1 begrenzter Bereich im Kugelhahn bildet einen Totraum 9, in den das abzudichtende Medium aufgrund unvermeidlicher Leckverluste im Laufe der Zeit einsickern kann, worauf später noch näher eingegangen wird.

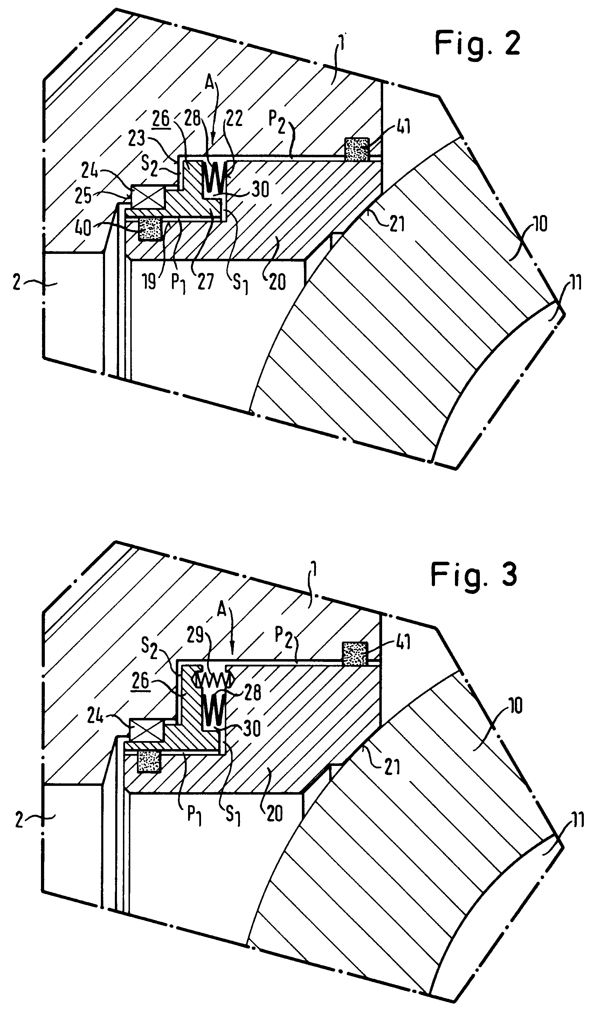

Die Dichtungsanordnung A, die im Detail in Fig. 2 gezeigt ist, umfasst ein ringförmiges Kugeldichtungselement 20 mit einer Kugeldichtfläche 21, die in dichtendem Eingriff mit der äusseren Oberfläche der Kugel 10 steht. Das Kugeldichtungselement 20 besteht vorzugsweise aus einem hitzebeständigen Material, wie Stahl, doch können auch andere geeignete metallische oder nicht metallische Materialien verwendet werden. Die Kugeldichtfläche 21 kann gehärtet sein. Vorzugsweise besteht zwischen Kugel 10 und Kugeldichtfläche 21 eine Metall-auf-Metallberührung.

Das Kugeldichtungselement 20 weist an einem aufstromseitigen Bereich seiner äusseren Oberfläche eine Aussparung auf, die eine im wesentlichen radiale Schulterfläche 22 und eine Umfangsfläche 19 mit reduziertem Durchmesser vorsieht, auf der eine ringförmige Druckbeaufschlagungseinrichtung oder ein Kolbenelement 26 mit radialem Spiel angeordnet ist. Aufgrund des radialen Spieles kann das abzudichtende Medium in den Freiraum zwischen der inneren Oberfläche des Kolbenelementes 26 und der äusseren Oberfläche 19 des Kugeldichtungselementes 20 eindringen, bzw. es wird dadurch eine erste axiale Passage $P_1$ gebildet, die eine Verbindung zwischen der Eintrittsseite des Kugelhahnes und einem nachfolgend näher beschriebenen Druckraum 30 im Kugeldichtungselement 20 schafft. Das radiale Spiel bzw. die Passage $P_1$ verleiht dem Kolbenelement 26 ausserdem eine ausreichende axiale Beweglichkeit relativ zum Kugeldichtungselement 20.

Das Kolbenelement 26 trägt auf der äusseren Umfangsfläche eines aufstromseitigen axialen Fortsatzes (nicht näher bezeichnet) mit verkleinertem Durchmesser ein ringförmiges Sekundärdichtungselement 24, das sich mit seinem abstromseitigen axialen Ende an einer Schulterfläche des Kolbenelementes 26 und an seinem gegenüberliegenden aufstromseitigen axialen Ende an einer Schulterfläche 25 des Gehäuses 1 abstützt sowie umfänglich in dichtender Berührung mit dem Gehäuse 1 bzw. dem Kolbenelement 26 steht.

Das Sekundärdichtungselement 24 besteht vorzugsweise aus einem Kohlenstoffmaterial mit Federeigenschaft, bei dem es sich insbesondere um verpressten Graphit bzw. Reingraphit handelt. Diese Material zeichnet sich gleichzeitig durch eine hohe Temperatur- und Chemikalienbeständigkeit, gute Gleit- und Dichtungseigenschaften und einem infolge einer begrenzten Kompressibilität federähnlichen Kraftverformungsverhalten aus. Dichtungselemente dieser Art sind an sich bekannt und können z.B. unter dem Handelnamen "Statotherm" von der Anmelderin der vorliegenden Erfindung bezogen werden.

Zwischen einer radialen abstromseitigen Stirnfläche des Kolbenelementes 26 und der gegenüberliegenden Schulterfläche 22 des Kugeldichtungselementes 20 ist ein Raum 30 definiert, der gegenüber dem vorerwähnten Totraum 9 des Kugelhahnes durch eine geeignete Einrichtung abgedichtet ist. Obschon andere Einrichtungen zur Abdichtung des Raumes 30 vorgesehen werden könnten, dient bei der gezeigten Ausführungsform diesem Zweck eine Balganordnung 28 aus einem geeigneten wärmebeständigen Material wie Stahl, die sich zwischen den gegenüberliegenden radialen Flächen des Kolbenelementes 26 und des Kugeldichtungselementes 20 erstreckt und damit abdichtend, z.B. durch Schweissen, verbunden ist.

Der durch die Balganordnung 28 abgedichtete Raum 30 steht über die oben erwähnte erste Passage $P_1$ in Verbindung mit dem aufstromseitigen Bereich der Durchgangspassage 2 des Kugelhahnes, so dass das Druckmedium über die erste Passage $P_1$ in den Raum 30 eindringen kann, um den Raum 30 mit dem Druck des abzudichtenden Mediums zu beaufschlagen. Infolge davon wird das Kolbenelement 26 eine den hydraulischen Flächenverhältnissen im Druckraum 30 entsprechende axiale Kraft auf das Sekundärdichtungselement 24 ausüben, so dass dieses eine axiale Stauchung, verbunden mit einer entsprechenden Durchmesservergrösserung seiner äusseren bzw. Durchmesserverringerung seiner inneren Umfangsfläche erfährt und dadurch die dichtende Beziehung zwischen dem Sekundärdichtungselement 24 und dem Gehäuse bzw. dem Kolbenelement 26 der einwirkenden Vorspannkraft im wesentlichen entspricht. Gleichzeitig wirkt eine der Vorspannkraft entsprechende Reaktionskraft auf das Kugeldichtungselement 20, um die Kugeldichtfläche 21 in dichtendem Eingriff mit der Oberfläche der Kugel 10 zu drücken.

Die axiale Beweglichkeit des Kolbenelementes 26 relativ zum Kugeldichtungselement 20 ist anschlagbegrenzt, um einesteils zu verhindern, dass unter übermässigen Drücken im Druckraum 30 das Sekundärdichtungselement 24 mit einer übermässigen Vorspannkraft beaufschlagt wird, und um andererseits eine übermässige Extension bzw. Stauchung der Balganordnung 28 zu vermeiden. Innerhalb der Grenzen der axialen Beweglichkeit es Kolbenelementes 26 besteht unter normalen Betriebsverhältnissen ein mit der ersten Passage $P_1$ verbundener radialer Spalt $S_1$ zwischen einem abstromseitigen Bereich des Kolbenelementes 26 und der Schulterfläche 22 des Kugeldichtungselementes 20 und ein weiterer mit einer zweiten Passage $P_2$ verbundener radialer Spalt $S_2$ zwischen einer aufstromseitigen Stirnfläche des Kolbenelementes 26 und einer benachbarten Schulterfläche 23 des Gehäuses 1. Die Passage $P_2$ stellt eine Verbindung zwischen dem Totraum 9 und dem radialen Spalt $S_2$ her.

Ein in den Totraum 9 eingesickertes Medium wird daher über die Passage $P_2$ und den Spalt $S_2$ auf aufstromseitige Stirnfläche des Kolbenelementes 26 einen Druck ausüben, der dem Druck im Druckraum 30 entgegenwirkt bzw. die auf das Sekundärdichtungselement 24 ausgeübte Vorspannkraft herabsetzt. Bei übermässigen Drücken im Totraum 9 können die hydraulischen Verhältnisse so sein, dass das Sekundärdichtungselement 24 bis zu einem Ausmass entlastet werden kann, dass eine Druckentlastung des Totraumes 9 über die Passage $P_2$, den Spalt $S_2$ und das Sekundärdichtungselement 24 in den aufstromseitigen Bereich der Durchgangspassage 2 des Kugelhahnes zustande kommt.

Darauf hinzuweisen ist ferner, dass zur Vermeidung eines Verstopfens der Passagen $P_1$ und $P_2$ geeignete Einrichtungen, z.B. in Gestalt von Filtereinrichtungen 40 und 41, vorgesehen sein können, um Partikel, die in dem in die Passagen $P_1$ und $P_2$ einströmenden Medium enthalten sein können, zurückzuhalten.

Fig. 3 zeigt eine modifizierte Ausführungsform der Erfindung. Die Ausführungsform nach Fig. 3 unterscheidet sich von derjenigen nach Fig. 2 im wesentlich nur darin, dass zwischen dem Kolbenelement 26 und dem Kugeldichtungselement 20 eine Einrichtung in Gestalt einer Vielzahl umfänglich in Abstand voneinander angeordneter Spiralfedern 29 vorgesehen ist, die das Kolbenelement 26 und damit das Sekundärdichtungselement 24 bzw. das Kugeldichtungselement 20 mit einer bestimmten mediumdruckunabhängigen Vorspannkraft beaufschlagen, um auch im drucklosen Zustand des Druckraumes 30 eine gewisse minimale Vorspannkraft auf besagte Elemente auszuüben. Im übrigen kann bezüglich weiterer Details auf Fig. 2 und die zugehörige Beschreibung Bezug genommen werden.

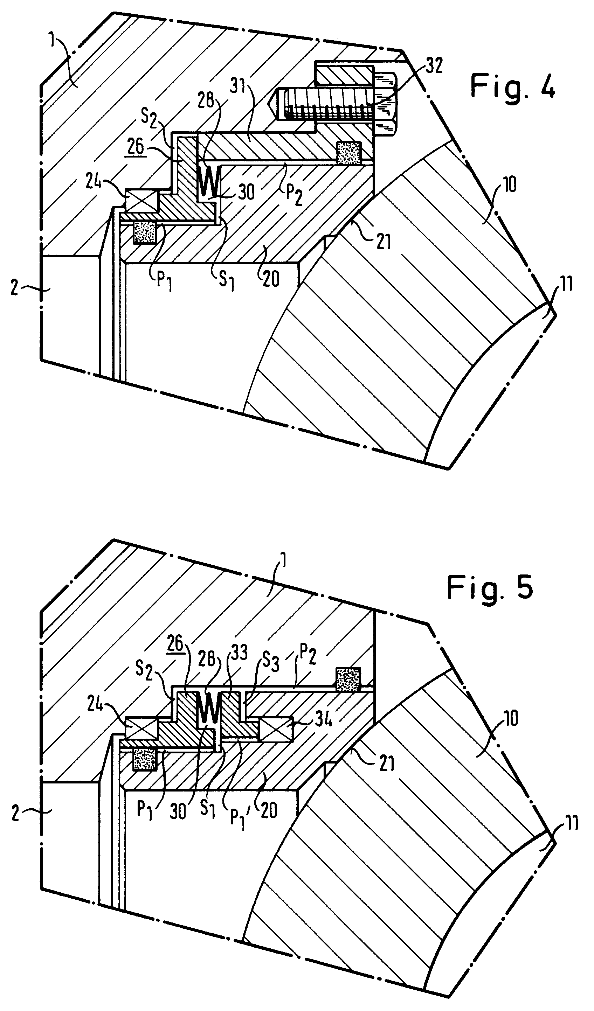

Eine andere Art des Aufbringens einer mediumdruckunabhängigen Vorspannkraft auf das Kolbenelement 26 ist in Fig. 4 gezeigt. Die mediumdruckunabhängige Vorspanneinrichtung 31, 32 gemäss dieser Ausführungsform der Erfindung umfasst eine Buchse 31, die einerends mit dem Gehäuse 1 fest verbunden, z.B. durch die gezeigten Schrauben 32 verschraubt ist, und anderenends mit einem abstromseitigen Bereich des Kolbenelementes 26 in Eingriff steht. Entsprechend der axialen Länge der Buchse 31 wird auf das Kolbenelement 26 und damit auf das Sekundärdichtungselement 24 eine mehr oder weniger hohe Vorspannkraft ausgeübt. Bezüglich weiterer Details dieser Ausführungsform kann auf die Ausführungsform nach Fig. 2 verwiesen werden.

Eine vierte Ausführungsform der Erfindung ist in Fig. 5 gezeigt. Bei dieser Ausführungsform ist dem Kolbenelement 26 gemäss der Ausführungsform nach Fig. 2 ein weiteres Kolbenelement 33 hinzugefügt, das ähnlich wie das Kolbenelement 26 mit radialem Spiel auf einem äusseren Umfangsbereich des Kugeldichtungselementes 20 gelagert ist und eine radiale aufstromseitige Stirnfläche hat, die der radialen abstromseitigen Stirnfläche des Kolbenelementes 26 gegenüberliegt. Bei dieser Ausführungsform ist der Druckraum 30 zwischen den gegenüberliegenden radialen Stirnflächen der Kolbenelemente 26 und 33 gebildet. Der Druckraum 30 ist durch eine Balganordnung 28 abgedichtet, die sich zwischen den Stirnflächen der Kolbenelemente 26 und 33 erstreckt und damit fest verbunden, z.B. verschweisst ist.

Das weitere Kolbenelement 33 steht an einem abstromseitigen Fortsatz in Eingriff mit einem ringförmigen im Kugeldichtungselement 20 angeordneten weiteren Dichtungselement 34, welches demzufolge durch das Kolbenelement 33 mit einer dem Druck im Druckraum 30 entsprechenden Vorspannkraft beaufschlagt wird. Das Dichtungselement 34 verhindert eine direkt Verbindung zwischen der ersten und zweiten Passage $P_1$ und $P_2$ und kann einen ähnlichen Aufbau wie das Sekundärdichtungselement 24 haben.

Darauf hinzuweisen ist ferner, dass die Bewegung des weiteren Kolbenelementes 33 gegen das Dichtungselement 34 innerhalb der Abmessungen eines Spaltes $S_3$ anschlagbegrenzt ist, der zwischen einer aufstromseitigen Schulterfläche des Kugeldichtungselementes 20 und einer abstromseitigen radialen Fläche des weiteren Kolbenelementes 33 unter normalen Betriebsbedingungen besteht und mit der zweiten Passage $P_2$ verbunden sein kann.

Die Dichtungsanordnung gemäss der Ausführungsform nach Fig. 5 bildet vorzugsweise eine Einheit, bestehend aus dem durch die Balganordnung 28 miteinander verbundenen Paar Kolbenelementen 26, 33 und dem Sekundärdichtungselement 24. Diese Ausführungsform kann daher bei Verschleiss besonders einfach demontiert und durch eine neue ersetzt werden. Darauf hinzuweisen ist ferner, dass die Kombination aus Kolbenelementen 26, 33 und Balganordnung 28 auch integral ausgebildet sein kann, indem die Konfiguration der einzelnen Funktionsbereiche aus einem Vollstück herausgearbeitet wird. Wenn erwünscht, kann ferner eine Federeinrichtung ähnlich der Federeinrichtung 29 nach der Ausführungsform gemäss Fig. 3 zwischen dem Paar Kolbenelementen 26, 33 vorgesehen sein, um diese mit einer anfänglichen mediumdruckunabhängigen Vorspannkraft zu beaufschlagen.

Es versteht sich, dass die Erfindung auf die vorausgehend beschriebenen Ausführungsformen nicht beschränkt ist, sondern auch Modifikationen umfasst, die sich dem Fachmann anhand der gegebenen Lehre anbieten. So könnte anstelle einer direkten Druckbeaufschlagung des Druckraumes durch Einleitung des abzudichtenden Mediums auch eine Druckbeaufschlagung via einer zwischen der ersten Passage und dem Druckraum angeordneten Druckübertragungsmembran erfolgen. Der Druckraum könnte dann mit einem geeigneten, z.B. inerten Druckmedium gefüllt sein. Ferner könnte die Abdichtung des Druckraumes gegenüber der zweiten Passage statt durch eine Balganordnung durch einen O-Ring oder dgl. erfolgen, der an einer geeigneten Stelle der zweiten Passage angeordnet werden könnte.

**Patentansprüche**

1.  Dichtungsanordnung für einen Kugelhahn, mit einem mit der Kugel in dichtendem Eingriff bringbaren und durch ein Sekundärdichtungselement gegenüber dem Gehäuse des Kugelhahnes abgedichteten Kugeldichtungselement und einer Einrichtung zur Beaufschlagung des Sekundärdichtungselementes mit einer Vorspannkraft, dadurch gekennzeichnet, dass die Vorspanneinrichtung ein auf dem Kugeldichtungselement (20) angeordnetes, einen in drückübertragender Beziehung mit der Mediumein- bzw. -austrittsseite des Kugelhahnes stehenden Druckraum (30) definierendes und mit dem Sekundärdichtungselement (24) in Eingriff stehendes Kolbenelement (26) umfasst, um auf das Sekundärdichtungselement eine dem Druck des abzudichtenden Mediums im wesentlichen entsprechende Vorspannkraft auszuüben.

2.  Dichtungsanordnung nach Anspruch 1, dadurch gekennzeichnet, dass das Kolbenelement (26) Träger des Sekundärdichtungselementes (24) ist.

3.  Dichtungsanordnung nach Anspruch 1 oder 2, dadurch gekennzeichnet, dass die axiale Beweglichkeit des Kolbenelementes (26) relativ zum Kugeldichtungselement (20) anschlagbegrenzt ist.

4. Dichtungsanordnung nach Anspruch 1 bis 3, gekennzeichnet durch eine Einrichtung (29;31,32) zur Beaufschlagung des Kolbenelementes (26) mit einer anfänglichen mediumdruckunabhängigen Vorspannkraft.

5. Dichtungsanordnung nach einem der vorhergehenden Ansprüche, dadurch gekennzeichnet, dass der Druckraum (30) durch eine Balganordnung (28) abgedichtet ist.

6. Dichtungsanordnung nach Anspruch 5, dadurch gekennzeichnet, dass die Balganordnung (28) Federeigenschaft besitzt.

7. Dichtungsanordnung nach einem der vorhergehenden Ansprüche, gekennzeichnet durch eine erste druckübertragende Passage ($P_1$) zwischen dem Inneren des Druckraumes (30) und der Mediumein- bzw. -austrittsseite des Kugelhahnes zur Einführung des abzudichtenden Mediums in den Druckraum.

8. Dichtungsanordnung nach einem der vorhergehenden Ansprüche, gekennzeichnet durch eine zweite druckübertragende Passage ($P_2$) zwischen einer der Mediumein- bzw. - austrittsseite des Kugelhahnes abgewandten Seite des Kugeldichtungselementes (20) und einer dem Druckraum (30) abgewandten Seite des Kolbenelementes (26), so dass bei einem Druck an der besagten Seite des Kolbenelementes das Sekundärdichtungselement (24) eine Entlastung erfährt.

9. Dichtungsanordnung nach Anspruch 7 oder 8, gekennzeichnet durch Filter (40,41) in der ersten und zweiten Passage ($P_1$,$P_2$) zum Ausfiltern von Fremdpartikeln.

10. Dichtungsanordnung nach einem der vorhergehenden Ansprüche, dadurch gekennzeichnet, dass der Druckraum (30) zwischen einem Paar gegenüberliegender Kolbenelemente gebildet ist, indem dem einen Kolbenelement (26) ein weiteres auf dem Kugeldichtungselement (20) angeordnetes Kolbenelement (33) zugeordnet ist.

11. Dichtungsanordnung nach Ansprüchen 5 und 10, dadurch gekennzeichnet, dass die Balganordnung (28) mit dem Paar gegenüberliegender Kolbenelemente (26,32) zu einer austauschbaren Einheit wenigstens bestehend aus den Kolbenelementen (26,32), der Balganordnung (28) und dem Sekundärdichtungselement (24) fest verbunden, insbesondere verschweisst ist.

12. Dichtungsanordnung nach einem der vorhergehenden Ansprüche, dadurch gekennzeichnet, dass das Sekundärdichtungselement (24) aus einem Kohlenstoffmaterial mit Federeigenschaft besteht.

13. Dichtungsanordnung nach einem der vorhergehenden Ansprüche, dadurch gekennzeichnet, dass das Kugeldichtungselement (20) mittels des Sekundärdichtungselementes (24) wenigstens teilweise gegenüber dem Gehäuse (1) des Kugelhahnes abgestützt ist.

Fig. 1

EP 0 483 611 A1

EP 0 483 611 A1

Fig. 2

Fig. 3

8

Fig. 4

Fig. 5

Europäisches
Patentamt

**EUROPÄISCHER RECHERCHENBERICHT**

Nummer der Anmeldung

EP    91 11 7738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 114 386 (DUMM) <br> * Abbildung 2 * | 1,2,4 | F16K 5/20 |
| A | <br> * Abbildung 2 * <br> --- | 7,8,10 | |
| A | DE-A-2 312 839 (HELBERG) <br><br> * Anspruch 5; Abbildung 3 * <br> --- | 1-4,10, 13 | |
| A | EP-A-0 202 666 (GROVE ITALIA) <br><br> * Abbildung 3 * <br> --- | 1-3,5-8, 13 | |
| A | US-A-3 266 769 (SHAND) <br> * Abbildungen 5-10 * <br> --- | 1,3,13 | |
| A | GB-A-2 188 708 (GROVE ITALIA) <br> * Abbildung 2 * <br> --- | 1 | |
| A | US-A-4 137 936 (SEKIMOTO ET AL) <br> * Abbildung 5 * <br> --- | 1 | RECHERCHIERTE SACHGEBIETE (Int. Cl.5 ) |
| A | EP-A-0 004 428 (KAMYR VALVES) <br> * Seite 5, Zeile 20 - Zeile 23; Abbildung 3 * <br> --- | 11 | F16K |
| D,A | EP-A-0 318 737 (FEODOR BURGMANN DICHTUNGSWERKE) <br> * Abbildung 1 * <br> --- | 12 | |
| D,A | DE-A-3 744 452 (FEODOR BURGMANN DICHTUNGSWERKE) <br> --- | | |
| D,A | EP-A-0 027 048 (T.K. VALVE) <br> --- | | |
| D,A | DE-A-2 435 051 (ARGUS GESELLSCHAFT) <br><br> ----- | | |

Der vorliegende Recherchenbericht wurde für alle Patentansprüche erstellt

| Recherchenort | Abschlußdatum der Recherche | Prüfer |
|---|---|---|
| BERLIN | 05 FEBRUAR 1992 | SCHLABBACH M. |